# EUROPEAN PATENT SPECIFICATION

(11) **EP 2 944 834 B1**
(45) Date of publication and mention of the grant of the patent: **27.03.2019**
(21) Application number: 14168203.9
(22) Date of filing: 14.05.2014
(51) Int. Cl.: F16B 41/00, B60R 21/20

(54) **Attachment assembly**
Befestigungsanordnung
Ensemble de fixation

(43) Date of publication of application: 18.11.2015
(73) Proprietor: Volvo Car Corporation, 40531 Göteborg (SE)
(72) Inventor: Nilsson, Tomas, 439 32 Onsala (SE); Ljunggren, Anders, 411 43 Göteborg (SE)
(74) Representative: Valea AB

(56) References cited:
- DE-U1- 29 614 832
- US-A- 3 137 336
- US-A- 3 508 775
- US-A- 4 889 453
- US-A1- 2008 038 086
- US-B2- 6 851 710

## Description

### TECHNICAL FIELD

The present disclosure relates to an attachment assembly for attaching a second object to a first object. The disclosure further relates to a use of the attachment assembly for attaching an automotive part, such as an inflatable curtain arrangement, to a vehicle. In addition the disclosure relates to a first kit, a second kit, a vehicle, as well as to a method for attaching a second object to a first object.

### BACKGROUND

Attaching a second object to a first object may sometimes be difficult for one person, since there is a desire to simultaneously hold the second object at a suitable position for fastening to the first object, to hold a fastening member, such as a screw, and to hold a tool used for attaching the fastening member, such as a screw-driver. The difficulties are increased if the second object is large and/or heavy. It is also more difficult if there is limited space available for the person doing the work and/or the person is unable to see the position of the attachment.

A typical situation may be when attaching an object, such as a panel, to a wall or a ceiling of a building, e.g. during construction. Another typical situation is during assembly of a vehicle when attaching an automotive part to the vehicle, e.g. when attaching an inflatable curtain arrangement to a cantrail, i.e. the portion of a vehicle body extending between the A, B and/or C pillars at the upper part of the vehicle. The inflatable curtain arrangement comprises a curtain-shaped airbag, which is adapted to cover the upper part of a vehicle's side in case of a side impact collision, thereby cushioning the heads of the passengers seated at that side. Since the inflatable curtain arrangement is part of a passenger protection system, it is desired that the fastening member is secured by a predetermined torque.

Such attachment work may be carried out more easily by two persons, e.g. one person holding the second object in position and the other fastening it by means of the fastening member using the tool.

Prior art solutions making it possible for one person to attach one object to another include using a temporary fixation of the second object to the first object, e.g. by means of a clamp to the first object or by a stand standing on e.g. the floor and pressing the second object towards the first object. Time is then spent to arrange the temporary fixation and to remove it afterwards.

Document US 6,851,710 B2 discloses using a clip, which is pushed into a corresponding opening of the vehicle surface thereby attaching an inflatable curtain arrangement to a vehicle. One embodiment discloses that a clip is used in combination with a rigid mechanical fastener, illustrated as a bolt.

In some situations, a clip does not provide enough mechanical strength of the final attachment. In the solution of US 6,851,710 B2 comprising the combined use of the clip and the rigid mechanical fastener, two different attachment steps are carried out by the operator, which takes some extra time.

Patent document US 3,137,336 relates to a two-part panel fastener comprising a retainer spring in a counterbore for retaining a screw.

Patent document US 2008/038086 A1 relates to a fastener element having a head section, a threaded shank section with threads at a pitch and a distal end section. A retention device is secured to the distal end section and is engageable with a fastener receiving member.

There is thus a desire for an improved attachment system, in particular for attaching an inflatable curtain arrangement to a vehicle, which attachment system is suitable for being handled by one person.

### SUMMARY

The object of the present disclosure is to overcome or ameliorate at least one of the disadvantages of the prior art, or to provide a useful alternative.

It is desirable to provide an attachment assembly, which offers a less complicated and easier to use attachment than the prior art.

It is further desirable that one person can carry out the attachment alone.

An object above may be achieved by the subject-matter of claim 1.

Thus, in a first aspect of the present invention there is provided an attachment assembly for attaching a second object to a first object according to claim 1. The attachment assembly comprises a screw and a nut. The screw has a head and a shaft and at least a portion of the shaft comprises a thread. The nut is adapted to be fixedly attached to the first object. The nut comprises a bore adapted for receiving the screw. The bore has an axial direction and a height along the axial direction. The attachment assembly further comprises a retaining element, which is adapted to be positioned at a perimeter of the shaft of the screw. The nut comprises an indentation adapted for receiving and holding the retaining element at least in the axial direction.

The first object may be a wall or a ceiling of a building. Alternatively, the first object may be a body portion of a vehicle, e.g. a cantrail or an A, B or C pillar.

The second object is typically large and/or heavy, such that it is difficult to handle for one person. If in a building, the second object may be a panel, e.g. a wall panel or ceiling panel. If in a vehicle, the second object may be a panel or an inflatable curtain arrangement.

The bore may be a through-going axial bore or it may be a blind bore.

The screw is intended to be screwed into the nut, which is fixedly attached to the first object to thereby attach the second object to the first object. As used herein, a screw is an externally threaded fastener capable of being inserted into holes in assembled parts, or mating with a preformed internal thread or forming its own thread, and of being tightened or released by torqueing a head of the screw.

The nut may be fixedly attached to a first substantially plate-shaped portion of the first object, which first portion comprises a first aperture. The nut is fixedly attached or attachable to the first portion e.g. by welding or adhesively, such that the nut is aligned with the first aperture, i.e. the bore of the nut is aligned with the first aperture, such that a screw going through the first aperture also can go through the bore. If welded, the nut may constitute a weld nut. The first aperture may be circular, polygonal or have an arbitrary shape. It should be large enough to allow the shaft of screw to pass. Yet, the nut should remain on the upper side of the first portion.

The screw and the nut are manufactured separately from each other. They may also be sold and/or used as separate units, being prepared for later attachment to each other. Purely as an example, the nut may be delivered as a part of a first kit also comprising the first object, e.g. a cantrail being sent to an assembly plant for vehicles, wherein another automotive part, such as an inflatable curtain arrangement, is attached to the cantrail. The screw may be delivered as a separate unit or may be delivered as part of a second kit also comprising the automotive part. The retaining element may be delivered mounted to the screw or it may be delivered as a separate unit and mounted to the screw at the assembly plant.

Preferably the second object, e.g. a second substantially plate-shaped portion of it, is provided with a second aperture having a large enough diameter and/or shape for the shaft of the screw to pass. The second aperture may be circular, polygonal or have an arbitrary shape. The head of the screw has a larger diameter than the shaft, such that the screw is able to retain the second object in place by means of the head. Alternatively, or as a complement, a washer may be used adjacent to the head of the screw for retaining the second object.

The screw is adapted to be pushed into the bore of the nut as far enough for the retaining element to reach the indentation, wherein the retaining element is received in such a way that the indentation can retain the screw, and optionally the second object. Preferably, a snap-in function is obtained by the shape and/or resiliency of the retaining element in relation to the indentation. The indentation may have a shape corresponding to the shape of the retaining element. The attachment assembly may be configured to such that the retaining element can carry the weight of the screw. As an alternative, or as a complement, the retaining element may be configured to such that the retaining element can carry the weight of the second object and the screw. The attachment may be performed when the second object is in a hanging position.

Since the retaining element is positioned on the screw, the user of the attachment assembly can easily ascertain that the retaining element is present, e.g. by looking at the screw or by touching it. This is in comparison to prior art attachment assemblies, wherein a retaining element is instead located in the nut, e.g. inside the bore, which is more difficult to see and/or touch.

Further, the screw is retained by the nut, once the screw has reached a pre-defined position in relation to the nut and hence also in relation to the first object. The pre-defined position is determined by the location of the indentation in the nut and the relative position of the retaining element on the screw. This differs from some prior art attachment assemblies, wherein the screw indeed is retained by the nut, but wherein there is no predefined relative position between the screw and the nut when retained.

Moreover, by utilizing the above-mentioned snap-in function the person pushing the screw into the nut can easily determine that the retaining element has reached the intended position in the indentation without having to see the attachment assembly itself, e.g. by sensing that the retaining element has reached its proper retaining position and/or by an audible "click" being heard.

The indentation may be located at a perimeter of the bore of the nut. It may be manufactured in the same manufacturing step as the bore.

The indentation may be located at a first end of the bore, which end is adapted to face the first object. Then the retaining element may be received in a space defined by the indentation and the first object together.

As an alternative, or as a complement, the indentation may be located within the bore, such that a distance x between the first end of the bore facing the first object and the indentation fulfils 0 < x ≤ h, preferably such that 0.1 h ≤ x ≤ h. Thereby the space for receiving and retaining the retaining element is independent of the diameter and the shape of the first aperture.

The retaining element may be adapted to be positioned in a thread on the shaft of the screw. This will help to hold the retaining element in place on the screw. As an alternative, or as a complement, the retaining element may be held by friction to the shaft of the screw, or it may be adhered to the screw by an adhesive. As yet an alternative, the shaft may be provided with a groove, particularly adapted to hold the retaining element.

The retaining element may comprise, or be constituted by, a ring-shaped member, e.g. a ring with a closed perimeter or a slotted ring, the ring-shaped member having an inner diameter being adapted to cooperate with the shaft of the screw. The inner diameter of the ring-shaped member may be less than an outer thread diameter of the screw and larger than an inner thread diameter of the screw, such that the retaining element may be held in a thread on the screw.

The retaining element may be resilient, e.g. having a resilient shape and/or comprising a resilient member. The retaining element may be resilient in the plane of the retaining element, e.g. by being able to change its diameter. The retaining element may be compressible in the radial direction. As an alternative, or as a complement, the retaining element may be able to flex out of its plane, e.g. in the axial direction. The retaining element may be bendable or foldable in the axial direction. Thereby the effective outer diameter is changed. The whole retaining element may be resilient or one or more portions of it may be resilient.

The screw is a thread-cutting screw or a thread-forming screw. At least a portion of the bore in that case has an inner diameter which is less than the outer thread diameter of the screw. A thread-cutting screw or thread-forming screw provides a higher friction than a corresponding non-thread-cutting screw or non-thread-forming screw, thereby increasing the mechanical strength of the attachment. It is thus possible to use a screw of smaller dimensions, e.g. by going down one step in the ISO metric M series of screw dimensions. In addition, using a thread-cutting screw or a thread-forming screw reduces the risk that the attachment assembly is destroyed due to improper alignment of the threads of the screw and the bore, respectively. There will thus be a higher tolerance for tightening the screw with a slightly oblique angle.

A suitable material for the screw is steel. A suitable material for the nut is steel. If the screw is thread-cutting or thread-forming, the material characteristics of the nut are selected such that the screw is able to cut or form a thread in the nut.

In a second aspect of the present invention there is provided a use of an attachment assembly as described herein for attaching an automotive part to a vehicle, wherein the first object is a body portion of the vehicle, e.g. a cantrail, and the second object is an automotive part, e.g. an inflatable curtain arrangement.

A first kit may be provided comprising a cantrail for a vehicle and the nut of the attachment assembly as described herein. The cantrail comprises a first substantially plate-shaped portion, which comprises a first aperture. The nut is fixedly attached to the first portion aligned with the first aperture. The nut may be attached by welding, thus constituting a weld nut. The first aperture may be circular, polygonal or have an arbitrary shape.

A second kit may be provided comprising an inflatable curtain arrangement for a vehicle, the screw of the attachment assembly as described herein and the retaining element of the attachment assembly as described herein. The retaining element is positioned at the screw. The inflatable curtain arrangement comprises a second substantially plate-shaped portion comprising a second aperture. The second aperture may be circular, polygonal or have an arbitrary shape. The shaft of the screw goes through the second aperture, such that the head of the screw is located at one side of the second portion and the retaining element at an opposite side of the second portion. The second aperture has a shape/diameter which is larger than that of an inner diameter of the shaft of the screw and less than an outer shape/diameter of the retaining element and less than an outer shape/diameter of the head of the screw.

In a third aspect of the present invention there is provided a vehicle comprising an attachment assembly as described herein.

In a fourth aspect of the present invention there is provided a method according to claim 11 for attaching a second object to a first object by means of an attachment assembly as described herein. The first object comprises a first substantially plate-shaped portion comprising a first aperture. The second object comprises a second substantially plate-shaped portion comprising a second aperture. The attachment assembly comprises a screw having a head and a shaft, at least a portion of the shaft comprising a thread, a nut comprising a bore adapted for receiving the screw, the bore having an axial direction, and a retaining element adapted to be positioned at a perimeter of the shaft of the screw. The nut comprises an indentation adapted for receiving and holding the retaining element at least in the axial direction. The method comprises the steps of:
a) Attaching the nut to the first portion of the first object, such that the bore is aligned with the first aperture,
b) Positioning the retaining element at the screw, such that the head of the screw is located at one side of the second object and the retaining element at an opposite side of the second object, the shaft of the screw going through the second aperture,
c) Placing the second object adjacent to the first object in a position allowing the screw to be screwed into the nut,
d) Applying a force in the axial direction to the screw, thereby pushing the retaining element through the first aperture and into the indentation of the nut, such that the retaining element is received and held at least in the axial direction,
e) Letting the retaining element retain the screw, and optionally the second object, while screwing the screw into the nut, thereby attaching the second object to the first object.

The step a) may be performed beforehand, such that the first object is delivered with a fixedly attached nut, e.g. to an assembly plant for vehicles.

The step b) may be performed beforehand, such that the second object is delivered with the screw attached to it in the above-described way.

The retaining element may be retained in the indentation by a snap-fit function, as is described above. See step d).

The first object may be a body portion of a vehicle, such as a cantrail, and the second object may be an inflatable curtain arrangement.

### BRIEF DESCRIPTION OF THE DRAWINGS

The present invention will hereinafter be further explained by means of non-limiting examples with reference to the appended drawings wherein:
Fig. 1 is a schematic side view of a portion of a vehicle comprising an inflatable curtain arrangement,
Fig. 2 illustrates the inflatable curtain arrangement in a storage state,
Fig. 3 illustrates a first embodiment of an attachment assembly according to the invention,
Fig. 4 is a schematic cross-sectional view of a nut of the attachment assembly of Fig. 3,
Fig. 5a and b illustrate the attachment assembly of Fig. 3 in use,
Fig. 6 is a schematic cross-sectional view of a nut of a second embodiment of the attachment assembly,
Fig. 7a-c illustrate a retaining element in an untensioned state and in a tensioned state,
Fig. 8a-b illustrate an alternative retaining element in a untensioned state and in a tensioned state,
Fig. 9a-c illustrate a second alternative retaining element in an untensioned state and in a tensioned state,
Fig. 10a-c illustrate a third alternative retaining element in an untensioned state and in a tensioned state,
Fig. 11a-b illustrate a fourth alternative retaining element in an untensioned state and in a tensioned state, and
Fig. 12 illustrates a fifth alternative retaining element.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

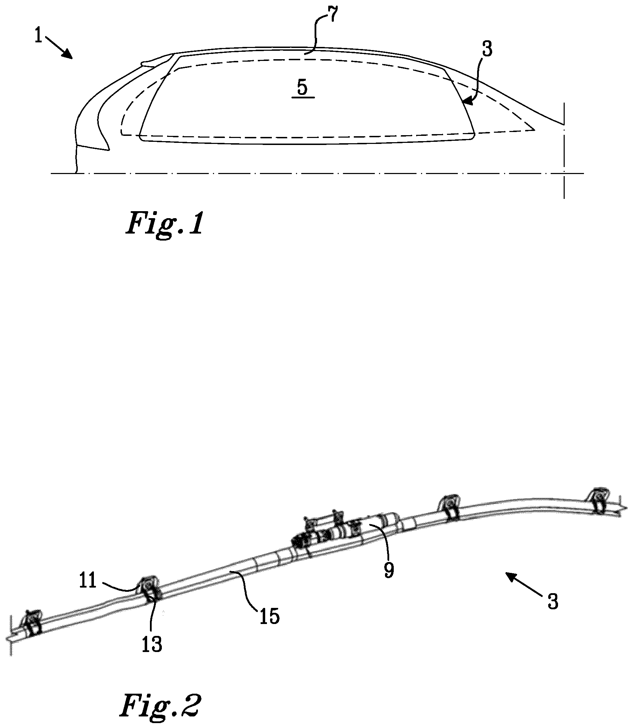

Figure 1 schematically illustrates a side view of a portion of a vehicle 1 comprising an inflatable curtain arrangement 3. The inflatable curtain arrangement 3 is shown in its deployed state, wherein an inflatable curtain 5 is ready to protect a passenger at a side impact on the vehicle 1. The inflatable curtain arrangement 3 is attached to a body of the vehicle 1, e.g. to a cantrail 7.

Normally the inflatable curtain arrangement 3 is in a storage state, see Figure 2, wherein it is folded and or rolled to a tubular shape. An inflator 9 is connected to the inflatable curtain arrangement. The inflator 9 may be activated by crash sensors, in case a collision occurs, thereby inflating the inflatable curtain arrangement 3, such that it assumes the deployed state as illustrated by Figure 1.

The inflatable curtain arrangement 3 is attached to the cantrail 7 by means of brackets 11 comprised in the inflatable curtain arrangement 3. The brackets 11 are used to retain the inflatable curtain arrangement 3 to the cantrail 7. In the illustrated embodiment, a portion 13 of the bracket 11 at least partly encircles a tubular body 15 of the inflatable curtain arrangement 3. The encircling portion 13 may be resilient and comprise a slot (not illustrated). When the encircling portion 13 is to be connected to the tubular body 15, the slot may in that case be widened such that the tubular body 15 can be entered through the slot and then the encircling portion 13 springs back to a retaining position, as the one illustrated in Figure 2. Alternatively, the bracket may be clipped to or around the tubular body 15, or the bracket may be glued or welded to the inflatable curtain arrangement 3.

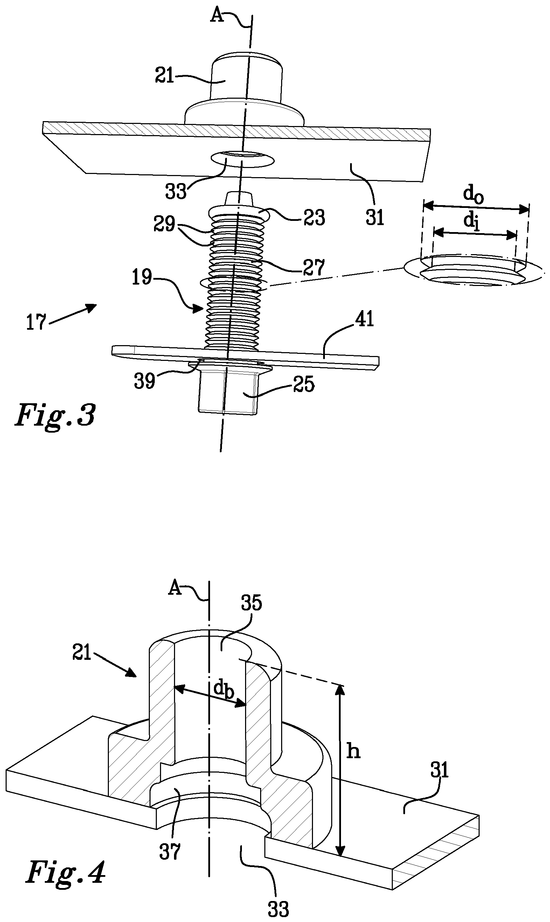

Figures 3-5 illustrate an attachment assembly 17 according to a first embodiment of the invention. The attachment assembly 17 of the first embodiment comprises a screw 19, a nut 21 and a retaining element 23.

The screw 19 comprises a head 25 and a shaft 27. At least a portion of the shaft 27, preferably a major portion of the shaft 27, is provided with a thread 29 following the surface of the shaft 27. The screw 19 has an outer diameter dₒ defined by the ridges of the thread 29 and an inner diameter dᵢ defined by the grooves of the thread 29. By definition the inner diameter is less than the outer diameter, dᵢ < dₒ.

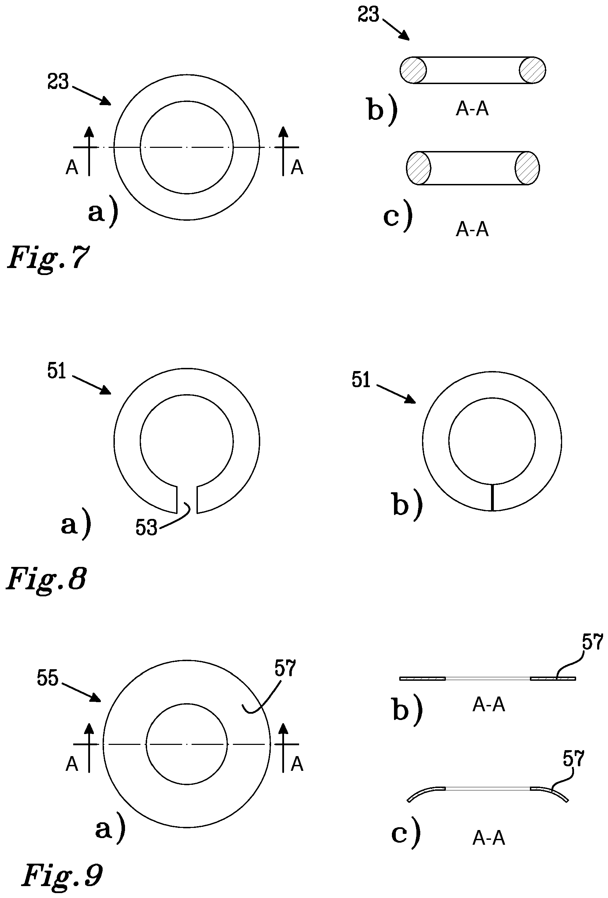

The retaining element 23 is adapted to be positioned at a perimeter of the shaft 27 of the screw 19. In the illustrated example the retaining element 23 is constituted by a ring-shaped member made of resilient material, such as rubber or plastic. The ring-shaped member 23 is further described in conjunction with Figure 7. Other examples of retaining elements are described in conjunction with Figures 8-12. The ring-shaped member 23 may substantially located in the thread 29, such that the thread 29 can help to keep the ring-shaped member 23 at the screw, thereby preventing it from falling off and/or getting lost. As an alternative, or as a complement, the ring-shaped member 23 may be held by friction to the shaft 27 of the screw 19, or the ring-shaped member 23 may be adhered to the screw 19 by an adhesive.

The nut 21 is fixedly attached to a first substantially plate-shaped portion 31 of a first object, e.g. of the cantrail 7 of Figure 1, which first portion 31 comprises a first aperture 33. The nut 21 is fixedly attached to the first portion 31 e.g. by welding, such that the nut 21 is aligned with the first aperture 33, the nut 21 then constituting a weld nut. The first aperture 33 may be circular, as is illustrated, polygonal or have an arbitrary shape. It should be large enough to allow the shaft 27 of screw 19 to pass. Yet, the nut 21 should remain on the upper side of the first portion 31.

Figure 4 shows a cross-section of the nut 21. The nut 21 comprises a bore 35 adapted for receiving the screw 19. The bore 35 has an axial direction A, a height h along the axial direction and it comprises a main portion having a diameter d_{b}. In the illustrated embodiment, the bore 35 goes all the way through the nut 21, but it may also be a blind bore. The nut 21 further comprises an indentation 37 adapted for receiving and holding the retaining element 23 at least in the axial direction A. The indentation 37 may allow rotational movement of the retaining element 23 around the axial direction A. In the illustrated embodiment a space is defined by the indentation 37 and the upper surface of the first portion 31 in a region around the first aperture 33, which space is adapted for receiving and retaining the retaining element 23.

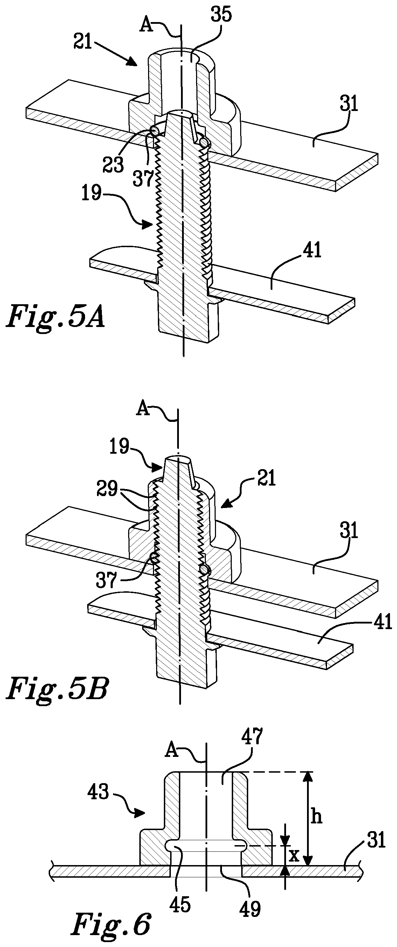

Going back again to Figure 3, it may be gleaned that the screw 19 is located such that the shaft 27 goes through a second aperture 39 in a second substantially plate-shaped portion 41 of a second object, e.g. the bracket 11 forming a part of an inflatable curtain arrangement 3 as shown in Figure 2. The second aperture 39 has a diameter, which is large enough for the shaft 27 of the screw 19 to go through, but which is small enough for the head 25 of the screw 19 to be stopped, such that the head 25 will be able to retain the inflatable curtain arrangement 3, once the screw 19 has been attached to the body of the vehicle, e.g. the cantrail 7. The second aperture 39 may be circular, polygonal or have an arbitrary shape. The head 25 of the screw 19 has a larger diameter than the rest of the screw 19. Optionally a washer may be used to further increase the diameter of the head. The head 25 is located below the second portion 41 and the retaining element 23 is located above the second portion 41. The outer shape of the retaining element 23 is larger than that of second aperture 39, such that the retaining element 23 will hold the screw in place in the second object, e.g. the bracket 11. This helps to retain the screw 19 in the inflatable curtain arrangement 3, thereby avoiding, or at least reducing, the risk of dropping the screw 19.
Preferably, the screw 19 is thread-forming or thread-cutting, and the nut 21 unthreaded, such that the screw 19 can form or cut a thread on its way through the bore 35, as is the case for the illustrated embodiment. Figure 5a illustrates the situation after the screw 19 has been pushed into the nut 21 by an axial force. The screw 19 will enter also if the force deviates from the axial direction A, as long as it has a component in the axial direction A. The axial force used to push the screw 19 is not especially high; to push the screw 19 by hand force is for example sufficient. As the screw 19 is being pushed inwards through the first aperture 33 and into the nut 21, the retaining element 23 is pushed until it reaches the indentation 37, it then expands and fills the indentation 37, achieving a snap-in function, such that the person pushing the screw 19 can determine that the retaining element 23 has reached the intended position in the indentation 37 and the screw 19 thus has reached a pre-defined position in relation to the nut 21, and hence to the first object, without having to see the attachment assembly 17 itself, e.g. by sensing that the retaining element 23 has reached its proper retaining position and/or by an audible "click" being heard.

The retaining element 23 will keep the screw 19 in place relative to the nut 21 and hence to the first object, here the first portion 31. The screw 19 will not move outwards again by itself, since it is retained by the retaining element 23.

The shape and the resiliency of the retaining element 23 may be adapted to hold the screw 19. Moreover, the shape and the resiliency of the retaining element 23 may be adapted such that when the screw 19 is used to hold an object, for example an inflatable curtain arrangement 3, the retaining element 23 is strong enough to retain the screw 19 including the weight of the inflatable curtain arrangement 3. However, it is preferably anyway possible to pull out the screw 19 again if applying a force above a predetermined level, e.g. if the inflatable curtain arrangement 3 is going to be exchanged. This predetermined level is selected to be high enough to ascertain that under normal conditions the retaining element 23 is strong enough to retain the screw 19 including the weight of the inflatable curtain arrangement 3.

In order to move the screw 19 further inwards into the bore 35, the screw 19 will be screwed, e.g. with a predefined torque. See Figure 5b. Since the object to be attached, i.e. the second object, in the example the inflatable curtain arrangement 3, is held in position at the object whereto it is to be attached, i.e. the first object, in this example the cantrail 7, by the screw 19 being retained by the retaining element 23 in the indentation 37, the person making the attachment will have both hands free to attach the screw 19 to the nut 21. The screw 19 is preferably attached by a predefined torque which is selected to fulfil security standards. In the illustrated embodiment, the screw 19 is thread-forming.

The above-described attachment assembly 17 may be handled also for the case when the person making the attachment cannot see the attachment assembly 17 during assembly.

A method for attaching a second object, such as the inflatable curtain arrangement 3, to a first object, such as the cantrail 7, by means of the attachment assembly 17 described herein comprises the steps of:
a) Attaching the nut 21 to the first portion 31 of the first object, here the cantrail 7, such that the bore 35 is aligned with the first aperture 33,
b) Positioning the retaining element 23 at the screw 19, such that the head 25 of the screw 19 is located at one side of the second object, here the bracket 11 forming a part of the inflatable curtain arrangement 3, and the retaining element 23 at an opposite side of the second object, the shaft 27 of the screw 19 going through the second aperture 39,
c) Placing the second object 3 adjacent to the first object 7 in a position allowing the screw 19 to be screwed into the nut 21,
d) Applying a force in the axial direction A to the screw 19, thereby pushing the retaining element 23 through the first aperture 33 and into the indentation 37 of the nut 21, such that the retaining element 23 is held at least in the axial direction A,
e) Letting the retaining element 23 retain the screw 19, and optionally the second object 3, while screwing the screw 19 into the nut 21, thereby attaching the second object, here the inflatable curtain arrangement 3, to the first object, here the cantrail 7.

The step a) may be performed beforehand, such that the first object is delivered with a fixedly attached nut, e.g. to an assembly plant for vehicles.

The step b) may be performed beforehand, such that the second object is delivered with the screw attached to it in the above-described way.

Preferably, the retaining element 23 is adapted such that it snap-fits into the indentation 37 of the nut 21, as is the case for the ring-shaped member 23 of the first embodiment and for the different retaining elements described below in conjunction with Figures 7-12.

Fig. 6 is a schematic cross-sectional view of a nut 43 of a second embodiment of the attachment assembly according to the invention. The nut 43 of the second embodiment differs from the nut 21 of the first embodiment in that an indentation 45 is formed entirely in the nut 43 itself. The nut 43 comprises a bore 47 adapted for receiving the screw 19. The bore 47 has an axial direction A and a height h along the axial direction. The indentation 45 is adapted to hold the retaining element 23 at least in the axial direction A, but may allow rotational movement of the retaining element 23 around the axial direction A. In the illustrated embodiment, the bore 47 goes all the way through the nut 43, but it may also be a blind bore. The indentation 45 is located at a distance x from a first end 49 of bore 47 facing the first object, here the first portion 31, wherein x fulfils 0 < x ≤ h, preferably such that 0.1 h ≤ x ≤ h, h being the height along the axial direction A.

Figures 7-12 illustrate different variants of the retaining element.

Figures 7a-c illustrate a ring-shaped member 23, as in the first embodiment of the attachment assembly 17 illustrated in Figures 3-5. The ring-shaped member 23 is made of resilient material, such as rubber or plastic, which can change its shape. Thereby the outer diameter of the ring-shaped member 51 is less in the tensioned state than in the untensioned state. Figure 7b shows a cross-section of the ring-shaped member 23 in an untensioned state, i.e. having a normal shape, while Figure 7c shows the ring-shaped member 23 in a tensioned state, such as when pushing the screw 19 upwards into the bore 35, 47. The cross-section is then oval. Thereby the outer diameter of the ring-shaped member 23 is less in the tensioned state than in the untensioned state. When the ring-shaped member 23 reaches the indentation 37, 45, it will spring back to its substantially normal shape, i.e. snapping into the indentation 37, 45, thereby retaining the screw 19.

Figures 8a and 8b illustrate a second type of ring-shaped member 51. The ring-shaped member 51 has a slot 53. Figure 8a shows the ring-shaped member 51 in an untensioned state, i.e. having a normal shape, wherein the slot 53 is open. Figure 8b shows the ring-shaped member 51 in a tensioned state, such as when pushing the screw 19 upwards into the bore 35, 47, wherein the slot 53 is less wide than in the untensioned state or even closed. This is achieved by flexing the ring-shaped member 51 in the plane of the ring-shaped member 51 itself. Thereby the outer diameter of the ring-shaped member 51 is less in the tensioned state than in the untensioned state. When the ring-shaped member 51 reaches the indentation 37, 45, it will spring back to its substantially normal shape, i.e. snapping into the indentation 37, 45, thereby retaining the screw 19.

Figures 9a-c illustrate a third type of ring-shaped member 55. The ring-shaped member 55 comprises, or is constituted by, a brim 57, which is able to flex out of the plane of the ring-shaped member 55 itself. Figure 9b shows a cross-section of the ring-shaped member 55 in an untensioned state, while Figure 9c shows a cross-section of the ring-shaped member 55 in a tensioned state, such as when pushing the screw 19 upwards into the bore 35, 47, wherein the brim 57 is at least partly curved downwards. Thereby the outer diameter of the ring-shaped member 55 is less in the tensioned state than in the untensioned state. Preferably the brim 57 is more easily bent downwards, like in Figure 9c, than upwards. When the ring-shaped member 55 reaches the indentation 37, 45, it will spring back to its substantially normal shape, i.e. snapping into the indentation 37, 45, thereby retaining the screw 19. Although the cross-section of Figure 9b is flat, it would also be possible that the brim 57 is angled downwards. This would help to obtain the desirable characteristics that the brim 57 is more easily bent downwards than upwards.

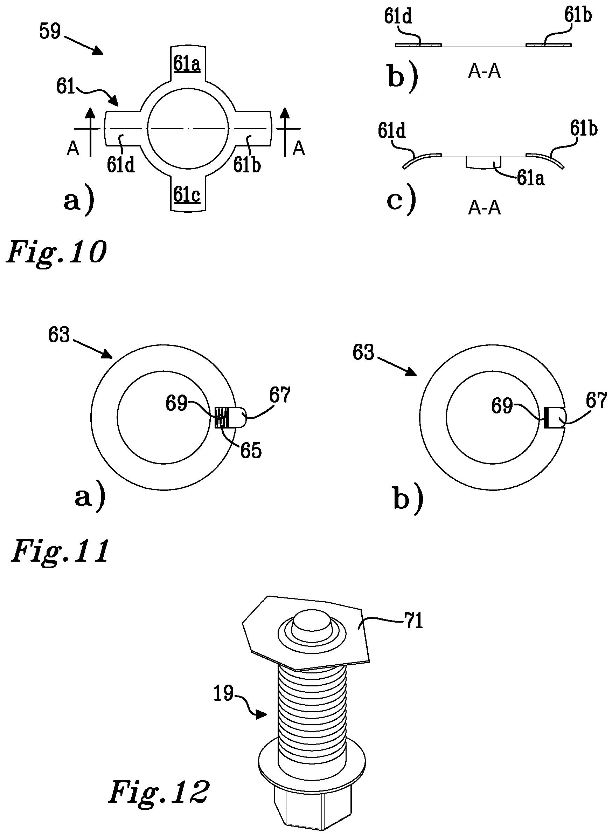

Figures 10a-c illustrate a fourth type of ring-shaped member 59. The ring-shaped member 59 comprises a brim 61, which is divided into portions 61a, 61b, 61c and 61d, which are able to flex out of the plane of the ring-shaped member 55 itself. The number of portions may be one, two, three, four, or more. Figure 10b shows the ring-shaped member 59 in an untensioned state, while Figure 10c shows the ring-shaped member 59 in a tensioned state, such as when pushing the screw 19 upwards into the bore 35, 47, wherein the brim portions 61a, 61b, 61c, and 61d are curved downwards. Thereby the outer diameter of the ring-shaped member 59 is less in the tensioned state than in the untensioned state. Preferably the brim 61 is more easily bent downwards, as in Figure 10c, than upwards. When the ring-shaped member 59 reaches the indentation 37, 45, it will spring back to its substantially normal shape, i.e. snapping into the indentation 37, 45, thereby retaining the screw 19. Although the cross-section of Figure 10b is flat, it would also be possible that the brim 61 is angled downwards. This would help to obtain the desirable characteristics that the brim 61 is more easily bent downwards than upwards.

Figures 11a and 11b illustrate a fifth type of ring-shaped member 63. The ring-shaped member 63 comprises a blind bore 65, which houses a snap member 67 and a spring member 69. The resiliency of the spring member 69 is chosen such that the snap member 67 is pushed outwards in a radial direction by the spring member 69 in an untensioned state. See Figure 11a. Figure 11b shows the ring-shaped member 63 in a tensioned state, such as when pushing the screw 19 upwards into the bore 35, 47, wherein the spring member 69 is compressed such that the snap member 67 is flush with the surface of the ring-shaped member 63. Thereby the outer diameter of the ring-shaped member 63 is less in the tensioned state than in the untensioned state. When the ring-shaped member 59 reaches the indentation 37, 45, the snap member 67 will be pushed outwards by the spring member 69, hence snapping into the indentation 37, 45, thereby retaining the screw 19. One, two, three or more snap members may be provided.

Figure 12 illustrates another kind of retaining element 71, which may have an arbitrary shape, regular or irregular, as is illustrated. The retaining element 71 is made of a thin film, e.g. made of plastic. The retaining element 71 may comprise, or be constituted by, a brim which may flex in a way already described in conjunction with Figures 9a-c.

Any attachment assembly as disclosed herein may be utilized when attaching any two objects to each other as disclosed herein. The first object may be a wall or a ceiling of a building. Alternatively, the first object may be a body portion of a vehicle, e.g. a cantrail or an A, B or C pillar. The second object is typically large and/or heavy, such that it is difficult to handle for one person. If in a building, the second object may be a panel, e.g. a wall panel or ceiling panel. If in a vehicle, the second object may be a panel or an inflatable curtain arrangement.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. An attachment assembly (17) for attaching a second object (3) to a first object (7), said attachment assembly (17) comprising
- a screw (19), said screw (19) having a head (25) and a shaft (27), at least a portion of said shaft (27) comprising a thread (29),
- a nut (21, 43) being adapted to be fixedly attached to said first object (7), said nut (21, 43) comprising a bore (35, 47) adapted for receiving said screw (19), said bore (35, 47) having an axial direction (A) and a height (h) along said axial direction (A),
said attachment assembly (17) further comprising
- a retaining element (23, 51, 55, 59, 63, 71), which before attachment of said second object (3) to said first object (7) is adapted to be positioned at a perimeter of said shaft (27) of said screw (19), such that said head (25) of said screw (19) is located at one side of said second object (3) and said retaining element (23, 51, 55, 59, 63, 71) at an opposite side of said second object (3),
said nut (21, 43) being unthreaded , and
said screw (19) being a thread-cutting screw or a thread-forming screw, at least a portion of said bore (35, 47) having an inner diameter (d_{b}) which is less than the outer thread diameter (dₒ) of said screw (19),
**characterized in that**
said nut (21, 43) comprises an indentation (37, 45) adapted for receiving and holding said retaining element (23, 51, 55, 59, 63, 71) at least in said axial direction (A).

2. The attachment assembly (17) according to claim 1, wherein said indentation (37, 45) is located at a perimeter of said bore (35, 47).

3. The attachment assembly (17) according to any one of the previous claims, wherein said indentation (37) is located at a first end (49) of said bore (35) adapted to face said first object (7).

4. The attachment assembly (17) according to any one of claims 1-2, wherein said indentation (45) is located within said bore (47), such that a distance x between said first end (49) of said bore (47) and said indentation (45) fulfils 0 < x ≤ h, preferably such that 0.1h ≤ x ≤ h.

5. The attachment assembly (17) according to any one of the previous claims, wherein said retaining element (23, 51, 55, 59, 63, 71) is adapted to be positioned in a thread (29) on said shaft (27) of said screw (19).

6. The attachment assembly (17) according to any one of the previous claims, wherein said retaining element (23, 51, 55, 59, 63, 71) is adapted to be held by friction against said shaft (27) of said screw (19).

7. The attachment assembly (17) according to any one of the previous claims, wherein said retaining element comprises a ring-shaped member (23, 51, 55, 59, 63), e.g. a ring (23, 55, 59, 63) with a closed perimeter or a slotted ring (51), said ring-shaped member having an inner diameter being adapted to cooperate with said shaft (27) of said screw (19).

8. The attachment assembly (17) according to any one of the previous claims, wherein said retaining element (23, 51, 55, 59, 63, 71) is resilient, e.g. having a resilient shape or comprising a resilient member.

9. A use of an attachment assembly (17) according to any one of the previous claims for attaching an automotive part to a vehicle (1), wherein said first object is a body portion of said vehicle (1), e.g. a cantrail (7), and said second object is an automotive part, e.g. an inflatable curtain arrangement (3).

10. A vehicle (1) comprising an attachment assembly (17) according to any one of claims 1-8.

11. A method for attaching a second object (3) to a first object (7) by means of an attachment assembly (17),
said first object (7) comprising a first substantially plate-shaped portion (31) comprising a first aperture (33), said second object (3) comprising a second substantially plate-shaped portion (41) comprising a second aperture (39), said attachment assembly (17) comprising
- a screw (19) having a head (25) and a shaft (27), at least a portion of said shaft (27) comprising a thread (39), said screw (19) being a thread-cutting screw or a thread-forming screw,
- an unthreaded nut (21, 43) comprising a bore (35, 47) adapted for receiving said screw (19), said bore (35, 47) having an axial direction (A), at least a portion of said bore (35, 47) having an inner diameter (d_{b}) which is less than the outer thread diameter (dₒ) of said screw (19), and
- a retaining element (23, 51, 55, 59, 63, 71) adapted to be positioned at a perimeter of said shaft (27) of said screw (19),
said nut (21, 43) comprising an indentation (37, 45) adapted for receiving and holding said retaining element (23, 51, 55, 59, 63, 71) at least in said axial direction (A),
said method comprising the steps of:
- attaching said nut (21, 43) to said first portion (31) of said first object (7), such that said bore (35, 47) is aligned with said first aperture (33),
- positioning said retaining element (23, 51, 55, 59, 63, 71) at said screw (19), such that said head (25) of said screw (19) is located at one side of said second object (3) and said retaining element (23, 51, 55, 59, 63, 71) at an opposite side of said second object (3), said shaft (27) of said screw (19) going through said second aperture (39),
- placing said second object (3) adjacent to said first object (7) in a position allowing said screw (19) to be screwed into said nut (21, 43),
- applying a force in said axial direction (A) to said screw (19), thereby pushing said retaining element (23, 51, 55, 59, 63, 71) through said first aperture (33) and into said indentation (37, 45) of said nut (21, 43), such that said retaining element (23, 51, 55, 59, 63, 71) is received and held at least in said axial direction (A),
- letting said retaining element (23, 51, 55, 59, 63, 71) retain said screw (19), and optionally said second object (3), while screwing said screw (19) into said nut (21, 43), such that said screw 19 forms or cuts a thread on its way through the bore (35, 47), thereby attaching said second object (3) to said first object (7).

## Patentansprüche

1. Befestigungsbaugruppe (17) zum Befestigen eines zweiten Objekts (3) an einem ersten Objekt (7), wobei die Befestigungsbaugruppe (17) aufweist
- eine Schraube (19), wobei die Schraube (19) einen Kopf (25) und einen Schaft (27) aufweist, wobei zumindest ein Abschnitt des Schafts (27) ein Gewinde (29) aufweist,
- eine Mutter (21,43), welche dafür angepasst, starr an dem ersten Objekt (7) befestigt zu werden, wobei die Mutter (21,43) eine Bohrung (35,47) aufweist, welche zum Aufnehmen der Schraube (19) angepasst ist, wobei die Bohrung (35,47) eine axiale Richtung (A) und eine Höhe (h) entlang der axialen Richtung (A) aufweist, wobei die Befestigungsbaugruppe (17) ferner aufweist
- ein Sicherungselement (23, 51, 55, 59, 63, 71), welches vor der Befestigung des zweiten Objekts (3) an dem ersten Objekt (7) dafür angepasst ist, an einem Umfang des Schafts (27) der Schraube (19) angeordnet zu werden, so dass sich der Kopf (25) der Schraube (19) an einer Seite des zweiten Objekts (3) befindet und das Sicherungselement (23, 51, 55, 59, 63, 71) an einer gegenüber liegenden Seite des zweiten Objekts (3),
wobei die Mutter (21,43) ohne Gewinde ist, und
die Schraube (19) eine Gewinde schneidende Schraube oder eine Gewinde formende Schraube ist, wobei zumindest ein Abschnitt der Bohrung (35, 47) einen Innendurchmesser (d_{b}) aufweist, welcher kleiner als der äußere Gewindedurchmesser (dₒ) der Schraube (19) ist,
**dadurch gekennzeichnet, dass**
die Mutter (21,43) eine Vertiefung (37, 45) aufweist, welche zum Aufnehmen und Halten des Sicherungselements (23, 51, 55, 59, 63, 71) in zumindest der axialen Richtung (A) angepasst ist.

2. Befestigungsbaugruppe (17) gemäß Anspruch 1, wobei sich die Vertiefung (37, 45) an einem Umfang der Bohrung (35,47) befindet.

3. Befestigungsbaugruppe (17) gemäß einem der vorhergehenden Ansprüche, wobei sich die Vertiefung (37) an einem ersten Ende (49) der Bohrung (35) befindet, welches dafür angepasst, um dem ersten Objekt (7) zugewandt zu sein.

4. Befestigungsbaugruppe (17) gemäß einem der Ansprüche 1-2, wobei sich die Vertiefung (45) innerhalb der Bohrung (47) befindet, so dass ein Abstand x zwischen dem ersten Ende (49) der Bohrung (47) und der Vertiefung (45) 0 < x ≤ h erfüllt, vorzugsweise so dass 0,1h ≤ x ≤ h.

5. Befestigungsbaugruppe (17) gemäß einem der vorhergehenden Ansprüche, wobei das Sicherungselement (23, 51, 55, 59, 63, 71) dafür angepasst ist, in einem Gewinde (29) des Schafts (27) der Schraube (19) angeordnet zu sein.

6. Befestigungsbaugruppe (17) nach einem der vorhergehenden Ansprüche, wobei das Sicherungselement (23, 51, 55, 59, 63, 71) dafür angepasst ist, durch Reibung gegen den Schaft (27) der Schraube (19) gehalten zu werden.

7. Befestigungsbaugruppe (17) nach einem der vorhergehenden Ansprüche, wobei das Sicherungselement (ein ringförmiges Element (23, 51, 55, 59, 63) aufweist, z. B. ein Ring (23, 55, 59, 63) mit einem geschlossenen Umfang oder ein geschlitzter Ring (51), wobei das ringförmige Element einen Innendurchmesser aufweist, welcher dafür angepasst ist, mit dem Schaft (27) der Schraube (19) zusammenzuwirken.

8. Befestigungsbaugruppe (17) gemäß einem der vorhergehenden Ansprüche, wobei das Sicherungselement (23, 51, 55, 59, 63, 71) elastisch ist, wobei es z.B. eine elastische Form aufweist oder ein elastisches Element aufweist.

9. Verwendung einer Befestigungsbaugruppe (17) gemäß einem der vorhergehenden Ansprüche zum Befestigen eines Automobilteils an einem Fahrzeug (1), wobei das erste Objekt ein Karosserieabschnitt des Fahrzeugs (1) ist, z.B. ein Dachlängsträger (7), und das zweite Objekt eine Automobilteil ist, z.B. eine aufblasbare Vorhanganordnung (3).

10. Fahrzeug (1), aufweisend eine Befestigungsbaugruppe (17) gemäß einem der Ansprüche 1-8.

11. Verfahren zum Befestigen eines zweiten Objekts (3) an einem ersten Objekt (7) mittels einer Befestigungsbaugruppe (17),
wobei das erste Objekt (7) einen ersten, im Wesentlichen plattenförmigen Abschnitt (31) aufweist, welcher eine erste Öffnung (33) aufweist, wobei das zweite Objekt (3) einen zweiten, im Wesentlichen plattenförmigen Abschnitt (41) aufweist, welcher eine zweite Öffnung (39) aufweist, wobei die Befestigungsbaugruppe (17) aufweist
- eine Schraube (19), welche einen Kopf (25) und einen Schaft (27) aufweist, wobei zumindest ein Abschnitt des Schafts (27) ein Gewinde (39) aufweist, wobei die Schraube (19) eine Gewinde schneidende Schraube oder eine Gewinde bildende Schraube ist,
- eine Mutter (21, 43) ohne Gewinde, welche eine Bohrung (35, 47) aufweist, welche zum Aufnehmen der Schraube (19) angepasst ist, wobei die Bohrung (35, 47) eine axiale Richtung (A) aufweist, wobei zumindest ein Abschnitt der Bohrung (35, 47) einen Innendurchmesser (d_{b}) aufweist, welcher kleiner als der äußere Gewindedurchmesser (dₒ) der Schraube (19) ist, und
- ein Sicherungselement (23, 51, 55, 59, 63, 71), welches dafür angepasst ist, an einem Umfang des Schafts (27) der Schraube (19) angeordnet zu werden, wobei die Mutter (21, 43) eine Vertiefung (37,45) aufweist, welche zum Aufnehmen und Halten des Sicherungselements (23, 51, 55, 59, 63, 71) in zumindest der axialen Richtung (A) angepasst ist,
wobei das Verfahren die Schritte aufweist:
- Befestigen der Mutter (21, 43) an dem ersten Abschnitt (31) des ersten Objekts (7), so dass die Bohrung (35, 47) mit der ersten Öffnung (33) ausgerichtet ist,
- Positionieren des Sicherungselements (23, 51, 55, 59, 63, 71) an der Schraube (19), so dass sich der Kopf (25) der Schraube (19) an einer Seite des zweiten Objekts (3) befindet und das Sicherungselement (23, 51, 55, 59, 63, 71) an der gegenüberliegenden Seite des zweiten Objekts (3) befindet, wobei der Schaft (27) der Schraube (19) durch die zweite Öffnung (39) verläuft,
- Anordnen des zweiten Objekts (3) neben dem ersten Objekt (7) in einer Position, welche es der Schraube (19) ermöglicht, in die Mutter (21, 43) geschraubt zu werden,
- Aufbringen einer Kraft in der axialen Richtung (A) auf die Schraube (19), wodurch das Sicherungselement (23, 51, 55, 59, 63, 71) durch die erste Öffnung (33) und in die Vertiefung (37, 45) der Mutter (21, 43) gedrückt wird, so dass das Sicherungselement (23, 51, 55, 59, 63, 71) aufgenommen und zumindest in der axialen Richtung (A) gehalten wird,
- das Sicherungselement (23, 51, 55, 59, 63, 71) die Schraube (19) und optional das zweite Objekt (3) sichern lassen, während die Schraube (19) in die Mutter (21, 43) geschraubt wird, so dass die Schraube (19) auf ihrem Weg durch die Bohrung (35, 47) ein Gewinde bildet oder schneidet, wodurch das zweite Objekt (3) an dem ersten Objekt (7) befestigt wird.

## Revendications

1. Ensemble de fixation (17) pour attacher un second objet (3) à un premier objet (7), ledit ensemble de fixation (17) comprenant:
une vis (19), ladite vis (19) présentant une tête (25) et une tige (27), au moins une partie de ladite tige (27) comportant un filet (29),
un écrou (21, 43) adapté pour être attaché fixement audit premier objet (7), ledit écrou (21, 43) comprenant un alésage (35, 47) adapté pour recevoir ladite vis (19), ledit alésage (35, 47) présentant une direction axiale (A) et une hauteur (h) le long de ladite direction axiale (A),
ledit ensemble de fixation (17) comprenant en outre:
un élément de retenue (23, 51, 55, 59, 63, 71), qui, avant d'attacher ledit second objet (3) audit premier objet (7), est adapté pour être positionné au niveau d'un périmètre de ladite tige (27) de ladite vis (19), de telle sorte que ladite tête (25) de ladite vis (19) soit située à un premier côté dudit second objet (3) et ledit élément de retenue (23, 51, 55, 59, 63, 71) à un côté opposé dudit second objet (3),
ledit écrou (21, 43) n'étant pas fileté, et
ladite vis (19) étant une vis auto-taraudeuse ou une vis de taille de filet, au moins une partie dudit alésage (35, 47) présentant un diamètre intérieur (d_{b}) qui est inférieur au diamètre de filet extérieur (dₒ) de ladite vis (19),
**caractérisé en ce que**
ledit écrou (21, 43) comporte une indentation (37, 45) adaptée pour recevoir et maintenir ledit élément de retenue (23, 51, 55, 59, 63, 71) au moins dans ladite direction axiale (A).

2. Ensemble de fixation (17) selon la revendication 1, dans lequel ladite indentation (37, 45) est située au niveau d'un périmètre dudit alésage (35, 47).

3. Ensemble de fixation (17) selon l'une quelconque des revendications précédentes, dans lequel ladite indentation (37) est située à une première extrémité (49) dudit alésage (35) adaptée pour faire face audit premier objet (7).

4. Ensemble de fixation (17) selon l'une quelconque des revendications 1 ou 2, dans lequel ladite indentation (45) est située à l'intérieur dudit alésage (47), de telle sorte qu'une distance x entre ladite première extrémité (49) dudit alésage (47) et ladite indentation (45) satisfasse 0 < x ≤ h, de préférence de telle sorte que 0,1 h ≤ x ≤ h.

5. Ensemble de fixation (17) selon l'une quelconque des revendications précédentes, dans lequel ledit élément de retenue (23, 51, 55, 59, 63, 71) est adapté pour être positionné dans un filet (29) sur ladite tige (27) de ladite vis (19).

6. Ensemble de fixation (17) selon l'une quelconque des revendications précédentes, dans lequel ledit élément de retenue (23, 51, 55, 59, 63, 71) est adapté pour être maintenu par frottement contre ladite tige (27) de ladite vis (19).

7. Ensemble de fixation (17) selon l'une quelconque des revendications précédentes, dans lequel ledit élément de retenue comprend un élément de forme annulaire (23, 51, 55, 59, 63), par exemple un anneau (23, 55, 59, 63) présentant un périmètre fermé ou un anneau fendu (51), ledit élément de forme annulaire présentant une diamètre intérieur adapté pour coopérer avec ladite tige (27) de ladite vis (19).

8. Ensemble de fixation (17) selon l'une quelconque des revendications précédentes, dans lequel ledit élément de retenue (23, 51, 55, 59, 63, 71) est élastique, par exemple présente une forme élastique ou comprend un élément élastique.

9. Utilisation d'un ensemble de fixation (17) selon l'une quelconque des revendications précédentes pour attacher une partie d'automobile à un véhicule (1), dans lequel ledit premier objet est une partie de carrosserie dudit véhicule (1), par exemple un renfort de toit (7), et ledit second objet est une partie d'automobile, par exemple un agencement de rideau gonflable (3).

10. Véhicule (1) comprenant un ensemble de fixation (17) selon l'une quelconque des revendications 1 à 8.

11. Procédé pour attacher un second objet (3) à un premier objet (7) au moyen d'un ensemble de fixation (17),
ledit premier objet (7) comprenant une première partie sensiblement en forme de plaque (31) comportant une première ouverture (33), ledit second objet (3) comprenant une seconde partie sensiblement en forme de plaque (41) comportant une seconde ouverture (39), ledit ensemble de fixation (17) comprenant:
une vis (19) présentant une tête (25) et une tige (27), au moins une partie de ladite tige (27) comportant un filet (39), ladite vis (19) étant une vis auto-taraudeuse ou une vis de taille de filet,
un écrou non fileté (21, 43) comprenant un alésage (35, 47) adapté pour recevoir ladite vis (19), ledit alésage (35, 47) présentant une direction axiale (A), au moins une partie dudit alésage (35, 47) présentant un diamètre intérieur (d_{b}) qui est inférieur au diamètre de filet extérieur (dₒ) de ladite vis (19), et
un élément de retenue (23, 51, 55, 59, 63, 71) adapté pour être positionné au niveau d'un périmètre de ladite tige (27) de ladite vis (19),
ledit écrou (21, 43) comportant une indentation (37, 45) adaptée pour recevoir et maintenir ledit élément de retenue (23, 51, 55, 59, 63, 71) au moins dans ladite direction axiale (A),
ledit procédé comprenant les étapes suivantes:
attacher ledit écrou (21, 43) à ladite première partie (31) dudit premier objet (7), de telle sorte que ledit alésage (35, 47) soit aligné avec ladite première ouverture (33),
positionner ledit élément de retenue (23, 51, 55, 59, 63, 71) au niveau de ladite vis (19), de telle sorte que ladite tête (25) de ladite vis (19) soit située à un premier côté dudit second objet (3) et ledit élément de retenue (23, 51, 55, 59, 63, 71) à un côté opposé dudit second objet (3), ladite tige (27) de ladite vis (19) passant à travers ladite seconde ouverture (39),
placer ledit second objet (3) adjacent audit premier objet (7) dans une position qui permet que ladite vis (19) soit vissée dans ledit écrou (21, 43),
appliquer une force dans ladite direction axiale (A) à ladite vis (19), poussant de ce fait ledit élément de retenue (23, 51, 55, 59, 63, 71) à travers ladite première ouverture (33) et dans ladite indentation (37, 45) dudit écrou (21, 43), de telle sorte que ledit élément de retenue (23, 51, 55, 59, 63, 71) soit reçu et maintenu au moins dans ladite direction axiale (A), et
laisser ledit élément de retenue (23, 51, 55, 59, 63, 71) retenir ladite vis (19), et optionnellement ledit second objet (3), tout en vissant ladite vis (19) dans ledit écrou (21, 43), de telle sorte que ladite vis (19) taraude ou taille un filet sur son chemin à travers l'alésage (35, 47), attachant de ce fait ledit second objet (3) audit premier objet (7).
